# EUROPÄISCHE PATENTSCHRIFT

(11) **EP 0 590 311 B1**
(45) Veröffentlichungstag und Bekanntmachung des Hinweises auf die Patenterteilung: **11.06.1997**
(21) Anmeldenummer: 93113626.1
(22) Anmeldetag: 26.08.1993
(51) Int. Cl.: A01D 78/12

(54) **Kreiselkörper für Heumaschinen, insbesondere für Kreiselschwader**
Rake wheel for haymaking machine especially for windrower
Rotor pour machine de fenaison en particulier pour andaîneuse

(30) Priorität: 30.09.1992 DE 4232768
(43) Veröffentlichungstag der Anmeldung: 06.04.1994
(73) Patentinhaber: CLAAS SAULGAU GMBH, D-88340 Saulgau (DE)
(72) Erfinder: Deni, Franz, D-88340 Saulgau-Bogenweiler (DE); Wetzel, Karl-Heinz, D-88340 Saulgau (DE)

(56) Entgegenhaltungen:
- EP-A- 0 130 617
- EP-A- 0 345 183
- DE-A- 1 960 236
- DE-A- 2 806 619
- DE-A- 4 036 685
- DE-A- 4 201 881
- FR-A- 2 065 591

## Beschreibung

Die Erfindung bezieht sich auf Kreiselkörper für Heumaschinen, insbesondere für Kreiselschwader nach dem Gattungsbegriff der Ansprüche 1 bzw. 5.

Kreiselkörper dieser Art sind zum Beispiel aus der Deutschen Patentschrift 2806619 bekannt. Zum Schutze der Steuerungsteile sind hier zwei Gehäuseteile vorgesehen, die im Abstand zueinander angeordnet sind, wobei zwischen beide Gehäuseteile Traglager eingeklemmt sind, die zusammen mit den Gehäuseteilen verspannt werden. Der zwischen zwei benachbarten Traglagern entstehende Spalt soll durch Füllstücke oder durch Blechschürzen verschlossen werden. Diese Ausführung schützt die Steuerungsteile zwar vor grober Verschmutzung, gibt aber keine ausreichende Abdichtung für flüssige oder halbflüssige Schmiermittel. Darüber hinaus ist diese Ausführung auf solche Kreiselkörper beschränkt, bei denen die Zinkenträger jeweils in einem einzigen Traglager gelagert sind.

Mit der Erfindung wird angestrebt, die Konstruktion eines Kreiselkörpers zu vereinfachen und zu verbilligen, die Verwendung von billigen, weil nicht mittragenden Traglagern zu ermöglichen und das Gehäuse rundum abzudichten. Weitere Maßnahmen nach der Erfindung sollen einer vielseitigen Anwendbarkeit des Gehäuses und einer besonders raumsparenden und billigen Ausbildung der Zinkentragarme dienen.

Zur Lösung dieser Aufgaben wird vorgeschlagen, die beiden Gehäuseteile über sich berührende Planflächen bzw. in einer, die Mittelebene der Traglager durchsetzenden Planfläche miteinander fest zu verbinden und so einen in sich geschlossenen Gehäusekörper mit großer Steifigkeit zu erzeugen. Im Bereich ihres Außendurchmessers sollen die Gehäuseteile Ausstülpungen haben, in die äußere Traglager eingelegt werden können. Zusätzlich können innere Traglager vorgesehen werden, die mit einem oder beiden Gehäuseteilen fest verbunden werden können und dadurch das vorzugsweise als Blechteil hergestellte Gehäuse weiter versteifen. Dadurch, daß die äußeren Traglager nicht verschraubt werden, können sie leicht mit den inneren Traglagern achsfluchtend montiert werden. Es ist besonders vorteilhaft, die beiden Gehäuseteile spiegelsymetrisch auszubilden, weil sie dadurch ohne weitere Änderung für rechts- wie auch für linkslaufende Kreisel montiert werden können. Weitere erfindungsgemäße Merkmale für die Ausgestaltung der Gehäuse sind in den Unteransprüchen 4 - 14 beansprucht.

Bei Kreiselkörpern, die mit einer großen Zahl von Zinkentragarmen ausgerüstet werden sollen, ist es erfahrungsgemäß besonders schwierig, die Steuerkurbeln so unterzubringen, daß sie sich gegenseitig nicht stören. Dies ist in eleganter und zugleich kostengünstiger Weise gemäß Anspruch 16 zu erreichen.

Ein weiterer Vorteil für die Montage und Lagerung der Kreiselkörper ergibt sich, wenn Zinkentragarme und Zinkenträger nach den Vorschlägen aus den Ansprüchen 17 und 18 gestaltet werden, weil dann keine den Außendurchmesser der Zinkentragarme überragenden Verbindungsteile vorhanden sind.

Die Erfindung wird anhand von sechs Abbildungen beispielsweise erläutert:

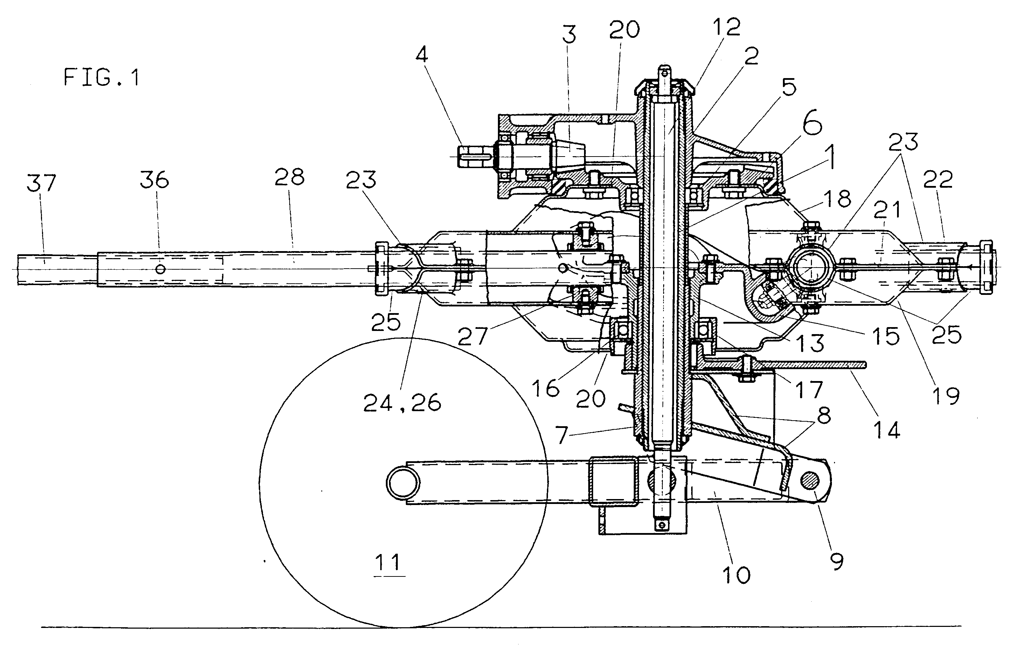

- Figur 1: zeigt einen Kreiselkörper für einen Kreiselschwader in einer Ansicht von der Seite, teilweise geschnitten

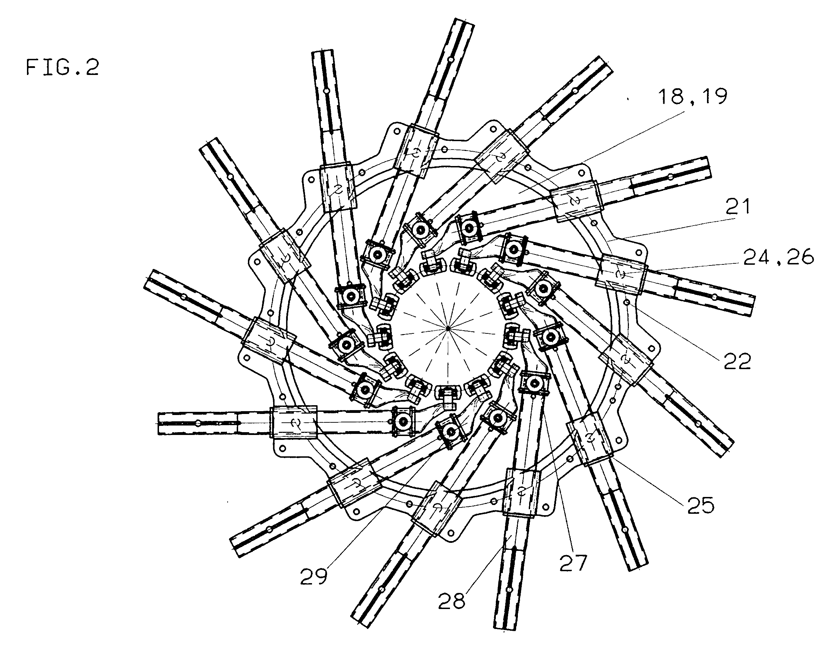

- Figur 2: zeigt den gleichen Gegenstand von oben in schematischer Darstellung,
- Figur 3: einen einzelnen Zinkentragarm vergrößert
- Figur 4: zeigt eine Ansicht nach Pfeil B der Figur 3
- Figur 5: zeigt einen Schnitt A - A der Figur 3
- Figur 6: zeigt einen Schnitt durch einen weiter nicht dargestellten, mit Zinken versehenen Zinkenträger

Eine hohle, etwa senkrecht stehende Säule (1) ist im Zentrum eines Kreiselkörpers vorgesehen. Im oberen Bereich der Säule (1) ist ein Getriebegehäuse (2) fest mit ihr verbunden. In dem Getriebegehäuse (2) ist eine Kegelritzelwelle (3) mit etwa horizontaler Achse drehbar gelagert. Über den das Getriebegehäuse (2) überragenden Achsstummel (4) erfolgt der Antrieb des Kreiselkörpers. Auf einem Kugellager (5), dessen Innenring fest mit der Säule 1 verbunden ist, ist ein mit der Kegelritzelwelle (3) kämmendes Kegelrad (6) drehbar gelagert.

Im unteren Bereich der Säule (1) ist eine Hülse (7) über diese gestülpt, und mit ihr fest verbunden. Die Hülse (7) ist mit einem Gestellrahmen (8) fest verbunden. Um einen Gelenkbolzen (9) am Gestellrahmen (8) ist ein Radträger (10) schwingbar gelagert. Der Radträger (10) trägt an seinem freien Ende ein Laufrad (11). Die hohle Säule (1) wird von einer Schraubspindel (12) durchsetzt, mit deren Hilfe der Radträger (10) in der Höhe verstellt werden kann. Im oberen Bereich der Hülse (7) ist eine Nabe (13) in Achsrichtung unbeweglich, aber drehbeweglich gelagert. Die Drehbewegung kann durch einen Stellhebel (14) eingeleitet und festgelegt werden. Mit der Nabe (13) ist eine Steuerkurve (15) fest verbunden. Weiterhin ist auf der Nabe (13) ein Kugellager (16) gelagert, dessen Außenring von einer Gehäuseglocke (17) umschlossen wird.

Zwei spiegelsymmetrische Gehäuseteile (18) und (19) sind mit Bohrungen (20) einerseits zu dem Kegelrad (6) und andererseits zu der Gehäuseglocke (17) zentriert und durch Verschraubung bzw. Verschweißung fest mit diesen Teilen verbunden. Die Gehäuseteile (18) (19) haben einander zugewandte Planflächen (21) mit Schraublöchern, die von Schrauben (22) durchsetzt werden, wodurch beide Gehäuseteile (18) (19) fest und dicht miteinander verbunden werden. Im Bereich ihres Außendurchmessers haben die Gehäuseteile (18) (19) halbzylinderförmige Ausstülpungen (23), deren Achsen einen gedachten Kreis tangieren, der zwischen dem Zentrum des Kreiselkörpers und dem Außendurchmesser der Gehäuseteile (18) (19) verläuft. In den Austülpungen (23) ist eine Querbohrung (24) vorgesehen. In je ein paar Ausstülpungen (23) können etwa hohlzylinderförmige, vorzugsweise aus Kunststoff gespritzte äußere Traglager (25) eingelegt werden. Diese haben radialgestellte zylindrische Ansätze (26), die in die Querbohrungen (24) eindringen. Die äußeren Traglager (25) werden dadurch in axialer Richtung festgehalten. Im inneren Bereich der Gehäuseteile (18) (19) sind innere Traglager (27) vorgesehen, die fest mit den Gehäuseteilen (18) (19) verschraubt werden und diese dadurch weiter versteifen. Die Bohrungen der äußeren und der inneren Traglager (25) und (27) fluchten.

Aus zylindrischen Rohren hergestellte Zinkentragarme (28) durchsetzen die äußeren und inneren Traglager (25) (27). Ihre inneren Enden sind plastisch derart verformt, daß sie Kurbelwangen (29) bilden. Mit den Kurbelwangen (29) ist ein Lagerbolzen (30) fest verbunden. Auf diesem ist mittels eines Kugellagers (31) eine Steuerrolle (32) drehbar gelagert. In der Nähe der Kurbelwange (29) ist eine Scheibe (33) fest oder lösbar befestigt. Diese Scheibe (33) legt sich gegen eine Stirnfläche eines inneren Traglagers (27) an und kann so axiale Kräfte auf dieses übertragen. Die Steuerrolle (32) läuft in einer C-förmig gestalteten Laufbahn der Steuerkurve (15).

An ihrem freien Ende sind die Zinkentragarme (28) im Durchmesser etwas eingezogen, damit sie leichter montiert werden können. Außerdem sind sie auf die Länge des eingezogenen Durchmessers mit längs eingepreßten Vertiefungen (34) versehen, die den Innendurchmesser derart verkleinern, daß dort Schrägflächen (35) entstehen, die als Drehmitnehmer dienen können. Die Zinkentragarme (28) sind außerdem im Bereich ihres eingezogenen Durchmessers mit einer Querbohrung (36) versehen.

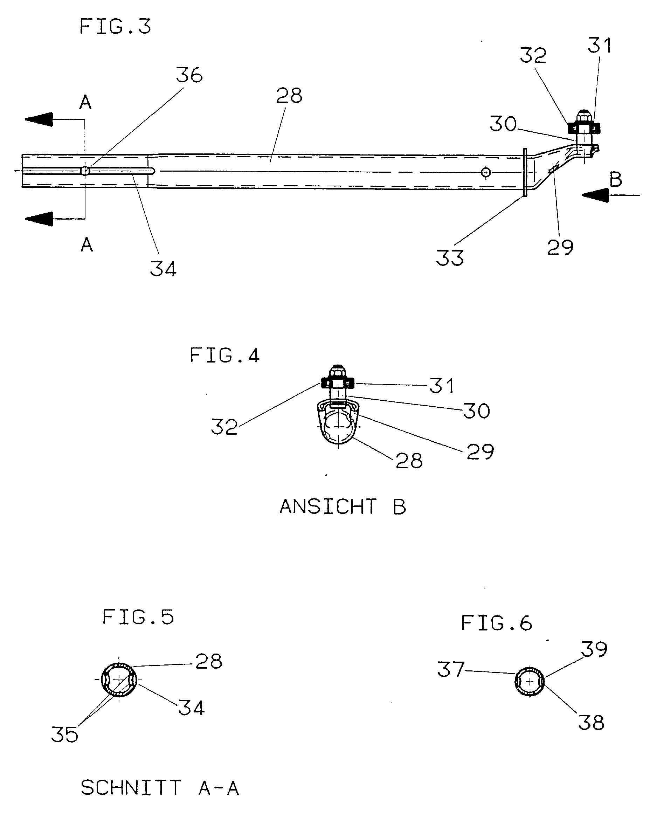

Mit nicht dargestellten Rechzinken bestückte Zinkenträger (37) (Figur 6) besitzen hohlkehlenförmige, längsgerichtete Vertiefungen (38), die in ihrer Form mit den Schrägflächen (35) der Zinkentragarme (28) korrespondieren. Die Zinkenträger (37) besitzen ebenso wie die Zinkentragarme (28) Querbohrungen (39) und können dadurch mittels Schrauben oder Federsteckern miteinander drehfest und axial gesichert verbunden werden.

## Patentansprüche

1. Kreiselkörper für Heumaschinen, insbesondere für Kreiselschwader, mit um eine etwa senkrechte Achse (1) umlaufenden, mit Zinken versehenen Tragarmen (28), die innerhalb eines geschlossenen zweiteiligen Gehäuses (18, 19) in Traglagern (25, 27), die beiden Gehäuseteilen (18, 19) zugeordnet sind, drehbar gelagert sind und die mittels einer Steuerkurve (15) gesteuert werden, dadurch gekennzeichnet, daß die beiden Gehäuseteile (18, 19) in einer, die Mittelebene der Traglager (25, 27) durchsetzenden Planfläche (21) fest miteinander verbunden sind.

2. Kreiselkörper nach Anspruch 1, dadurch gekennzeichnet, daß die beiden Gehäuseteile (18) (19) spiegelsymmetrisch ausgebildet sind.

3. Kreiselkörper nach den Ansprüchen 1 oder 2, dadurch gekennzeichnet, daß die Planflächen (21) der Gehäuseteile (18) (19) Ausstülpungen (23) besitzen, in die äußere Traglager (25) eingesetzt werden können.

4. Kreiselkörper nach Anspruch 3, dadurch gekennzeichnet, daß die Ausstülpungen (23) in den Gehäuseteilen (18) (19) halbzylinderförmig sind.

5. Kreiselkörper für Heumaschinen, besonders für Kreiselschwader, mit um eine etwa senkrechte Achse (1) umlaufenden, mit Zinken versehenen Tragarmen (28), die innerhalb eines geschlossenen zweiteiligen Gehäuses (18, 19) in Traglagern (25, 27), die beiden Gehäuseteilen (18, 19) zugeordnet sind, drehbar gelagert sind und die mittels einer Steuerkurve (15) gesteuert werden, dadurch gekennzeichnet, daß die beiden Gehäuseteile (18, 19) über sich berührende Planflächen (21) fest miteinander verbunden sind, wobei die Planflächen (21) der Gehäuseteile (18, 19) Ausstülpungen (23) besitzen, in die äußere Traglager (25) eingesetzt werden können.

6. Kreiselkörper nach den Ansprüchen 1 bis 5, dadurch gekennzeichnet, daß innerhalb der Gehäuseteile (18) (19) weitere, mehr zur Mittelachse hin gerückte innere Traglager (27) angeordnet sind.

7. Kreiselkörper nach Anspruch 6, dadurch gekennzeichnet, daß die inneren Traglager (27) fest mit mindestens einem Gehäuseteil (18) oder (19), vorzugsweise aber mit beiden Gehäuseteilen (18) (19) fest verbunden sind.

8. Kreiselkörper nach den Ansprüchen 3 bis 5, dadurch gekennzeichnet, daß die äußeren Traglager (25) radial gerichtete zylindrische Ansätze (26) aufweisen, die formschlüssig in Bohrungen (24) in den Ausstülpungen (23) der Gehäuseteile (18) (19) eingreifen.

9. Kreiselkörper nach den Ansprüchen 6 bis 7, dadurch gekennzeichnet, daß die inneren Traglager (27) radial gerichtete zylindrische Ansätze aufweisen, die formschlüssig in Bohrungen in den Mantelflächen der Gehäuseteile (18) (19) eingreifen.

10. Kreiselkörper nach den Ansprüchen 3 bis 9, dadurch gekennzeichnet, daß die Traglager (25) (27) aus Kunststoffpressteilen bestehen.

11. Kreiselkörper nach Anspruch 10, dadurch gekennzeichnet, daß die Traglager (25) (27) mit angespritzten Dichtlippen versehen sind, die eine Abdichtung zu den Gehäuseteilen (18) (19) bewirken.

12. Kreiselkörper nach Anspruch 9, dadurch gekennzeichnet, daß die zylindrischen Ansätze der inneren Traglager (27) als Metallteile ausgeführt sind, die in die inneren Traglager (27) eingelegt sind.

13. Kreiselkörper nach den Ansprüchen 1 bis 12, dadurch gekennzeichnet, daß das obere Gehäuseteil (18) unmittelbar mit einem antreibenden Kegelrad (6) fest verbunden ist.

14. Kreiselkörper nach den Ansprüchen 1 bis 13, dadurch gekennzeichnet, daß das untere Gehäuseteil (19) mit einer, ein Kugellager (16) aufnehmenden Gehäuseglocke (17) fest verbunden ist.

15. Kreiselkörper nach den Ansprüchen 1 bis 14, dadurch gekennzeichnet, daß die Zinkentragarme (28) jeweils ein äußeres und ein inneres Traglager (25) bzw. (27) durchsetzen.

16. Kreiselkörper nach Anspruch 15, dadurch gekennzeichnet, daß die Zinkentragarme (28) aus zylindrischen Rohren bestehen, deren, der Mitte der Kreiselkörper zugewandten Enden plastisch derart verformt sind, daß sie Kurbelwangen (29) bilden, die ihrerseits fest mit Lagerbolzen (30) für Steuerrollen (32) verbunden sind.

17. Kreiselkörper nach Anspruch 15, dadurch gekennzeichnet, daß die Zinkentragarme (28) aus zylindrischen Rohren bestehen, die an ihren, dem Kreiselkörper abgewandten Enden derart plastisch verformt sind, daß nach ihrer Mittelachse zu gerichtete Mitnehmerflächen (35) entstehen.

18. Kreiselkörper nach Anspruch 17, dadurch gekennzeichnet, daß in die, dem Kreiselkörper abgewandten Enden der Zinkentragarme (28) Zinkenträger (37) eingeführt werden können, die an ihrem Umfang Nuten (38) besitzen, die zusammen mit den Mitnehmerflächen (35) der Zinkentragarme (28) eine drehfeste Verbindung darstellen.

## Claims

1. A rotor for hay making machines, in particular for rotary windrowers, comprising support arms (28) which rotate about a substantially perpendicular axis (1) and which are provided with tines and which are rotatably mounted within a closed two-part housing (18, 19) in support bearings (25, 27) associated with both housing portions (18, 19) and which are controlled by means of a control cam (15), characterised in that the two housing portions (18, 19) are fixedly connected together in a planar surface (21) which passes through the central plane of the support bearings (25, 27).

2. A rotor according to claim 1 characterised in that the two housing portions (18, 19) are of mirror-image symmetrical configuration.

3. A rotor according to claim 1 or claim 2 characterised in that the planar surfaces (21) of the housing portions (18, 19) have protuberances (23) into which outer support bearings (25) can be fitted.

4. A rotor according to claim 3 characterised in that the protuberances (23) in the housing portions (18, 19) are of a semicylindrical shape.

5. A rotor for hay making machines, in particular for rotary windrowers, comprising support arms (28) which rotate about a substantially perpendicular axis (1) and which are provided with tines and which are rotatably mounted within a closed two-part housing (18, 19) in support bearings (25, 27) associated with both housing portions (18, 19) and which are controlled by means of a control cam (15), characterised in that the two housing portions (18, 19) are fixedly connected together by way of planar surfaces (21) which are in contact with each other, wherein the planar surfaces (21) of the housing portions (18, 19) have protuberances (23) into which outer support bearings (25) can be fitted.

6. A rotor according to claims 1 to 5 characterised in that further inner support bearings (27) which are moved more towards the central axis are arranged within the housing portions (18, 19).

7. A rotor according to claim 6 characterised in that the inner support bearings (27) are fixedly connected to at least one housing portion (18) or (19) but preferably both housing portions (18, 19).

8. A rotor according to claims 3 to 5 characterised in that the outer support bearings (25) have radially directed cylindrical projections (26) which positively lockingly engage into bores (24) in the protuberances (23) of the housing portions (18, 19).

9. A rotor according to claims 6 and 7 characterised in that the inner support bearings (27) have radially directed cylindrical projections which positively lockingly engage into bores in the peripheral surfaces of the housing portions (18, 19).

10. A rotor according to claims 3 to 9 characterised in that the support bearings (25, 27) comprise plastics mouldings.

11. A rotor according to claim 10 characterised in that the support bearings (25, 27) are provided with sealing lips which are injection-moulded thereon and which provide for a sealing action relative to the housing portions (18, 19).

12. A rotor according to claim 9 characterised in that the cylindrical projections on the inner support bearings (27) are in the form of metal portions which are inserted into the inner support bearings (27).

13. A rotor according to claims 1 to 12 characterised in that the upper housing portion (18) is directly fixedly connected to the driving bevel wheel (6).

14. A rotor according to claims 1 to 13 characterised in that the lower housing portion (19) is fixedly connected to a housing bell (17) which accomodates a ball bearing (16).

15. A rotor according to claims 1 to 14 characterised in that the tine support arms (28) each pass through an outer and an inner support bearing (25) and (27) respectively.

16. A rotor according to claim 15 characterised in that the tine support arms (28) comprise cylindrical tubes whose ends which are towards the centre of the rotors are plastically deformed in such a way that they form crank webs (29) which in turn are fixedly connected to mounting pins (30) for control rollers (32).

17. A rotor according to claim 15 characterised in that the tine support arms (28) comprise cylindrical tubes which at their ends remote from the rotor are plastically deformed in such a way as to provide entrainment surfaces (35) directed towards their central axis.

18. A rotor according to claim 17 characterised in that tine carriers (37) can be inserted into the ends of the tine support arms (28), which are remote from the rotor, which tine carriers have at their periphery grooves (38) which together with the entrainment surfaces (35) of the tine support arms (28) represent a non-rotatable connection.

## Revendications

1. Rotor pour machines de fanage, notamment pour des andaineuses à rotors, comportant des bras de support (28) qui tournent autour d'un axe approximativement vertical (1), sont pourvus de dents et montés de manière à pouvoir tourner à l'intérieur d'un carter fermé (18,19) formé de deux éléments, dans des paliers d'appui (25,27) qui sont associés aux deux éléments (18,19) du carter et sont commandés au moyen d'une came de commande (15), caractérisé en ce que les deux éléments (18,19) du carter sont reliés entre eux de façon fixe au niveau d'une surface plane (21) qui recoupe le plan médian des paliers d'appui (25,27).

2. Rotor selon la revendication 1, caractérisé en ce que les deux éléments (18 , 19) du carter sont spéculairement symétriques l'un de l'autre.

3. Rotor selon la revendication 1 ou 2, caractérisé en ce que les surfaces planes (21) des éléments (18 , 19) du carter comportent des parties saillantes (23) dans lesquelles peuvent être insérés des paliers d'appui extérieurs (25).

4. Rotor selon la revendication 3, caractérisé en ce que les parties saillantes (23) présentes sur les éléments (18 , 19) du carter ont une forme semi-cylindrique.

5. Rotor pour machines de fanage, notamment pour andaineuses à rotors, comportant des bras de support (28) qui tournent autour d'un axe approximativement vertical (1), sont pourvus de dents et montés de manière à pouvoir tourner à l'intérieur d'un carter fermé (18,19) formé de deux éléments, dans des paliers d'appui (25,27) qui sont associés aux deux éléments (18,19) du carter et sont commandés au moyen d'une came de commande (15), caractérisé en ce que les deux éléments (18,19) du carter sont reliés entre eux de façon fixe au niveau de surfaces planes (21) qui se touchent, les faces planes (21) des éléments (18,19) du carter possédant des parties saillantes (23) dans lesquelles peuvent être insérés des paliers d'appui extérieurs (25).

6. Rotor selon les revendications 1 à 5, caractérisé en ce que d'autres paliers d'appui intérieurs (27) qui sont plus proches de l'axe central sont disposés à l'intérieur des éléments (18 , 19) du carter.

7. Rotor selon la revendication 6, caractérisé en ce que les paliers d'appui intérieur (27) sont reliés rigidement à au moins un élément (18 , 19) du carter, mais de préférence aux deux éléments (18 , 19) du carter.

8. Rotor selon les revendications 3 à 5, caractérisé en ce que les paliers d'appui extérieurs (25) possèdent des embouts saillants cylindriques (26) dirigés radialement et qui s'engagent, selon une liaison par formes complémentaires, dans des perçages (24) aménagés dans les parties saillantes (23) des éléments (18 , 19) du carter.

9. Rotor selon les revendications 6 à 7, caractérisé en ce que les paliers d'appui intérieurs (27) possèdent des embouts saillants cylindriques dirigés radialement et qui s engagent, selon une liaison par formes complémentaires, dans des perçages aménagés dans les surfaces enveloppes des éléments (18 , 19) du carter.

10. Rotor selon les revendications 3 à 9, caractérisé en ce que les paliers d'appui (25 , 27) sont formés de pièces moulées par compression en matière plastique.

11. Rotor selon la revendication 10, caractérisé en ce que les paliers d'appui (25 , 27) comportent des lèvres d'étanchéité moulées par injection et qui établissent une étanchéité par rapport aux éléments (18, 19) du carter.

12. Rotor selon la revendication 9, caractérisé en ce que les embouts saillants cylindriques des paliers d'appui intérieurs (27) sont agencés sous la forme de pièces métalliques qui sont insérées dans les paliers d'appui intérieurs (27).

13. Rotor selon les revendications 1 à 12, caractérisé en ce que l'élément supérieur (18) du carter est relié de façon fixe directement à une roue conique d'entraînement (6).

14. Rotor selon les revendications 1 à 13, caractérisé en ce que l'élément inférieur (19) du carter est relié de façon fixe à une cloche (17) du carter; qui loge un roulement à billes (16).

15. Rotor selon les revendications 1 à 14, caractérisé en ce que les bras de support (28) pourvus de dents traversent respectivement un palier d'appui extérieur (25) et un palier d'appui intérieur (27).

16. Rotor selon la revendication 15, caractérisé en ce que les bras de support (28) pourvus de dents sont constitués de tubes cylindriques dont les extrémités, tournées vers le centre du rotor sont déformées plastiquement de telle sorte qu'ils forment des bras de manivelle (29) qui pour leur part sont reliés de façon fixe à des tourillons (30) pour des galets de commande (32).

17. Rotor selon la revendication 15, caractérisé en ce que les bras de support (28) pourvus de dents sont constitués par des tubes cylindriques qui sont déformés plastiquement au niveau de leurs extrémités tournées à l'opposé du rotor, en formant des surfaces d'entraînement (35) dirigées vers leur axe médian.

18. Rotor selon la revendication 17, caractérisé en ce que dans les extrémités, tournées à l'opposé du rotor, des bras de support (28) pourvus de dents peuvent être insérés des supports de dents (37) qui comportent sur leur périphérie des rainures (38) qui représentent conjointement avec les surfaces d'entraînement (35) des bras de support (28) pourvus de dents, une liaison solidaire en rotation.
